(19) Europäisches Patentamt
European Patent Office
Office européen des brevets

(11) **EP 2 529 105 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
***F02N 11/08*** *(2006.01)* ***G01P 3/489*** *(2006.01)*

(21) Anmeldenummer: **10800772.5**

(86) Internationale Anmeldenummer:
**PCT/EP2010/070903**

(22) Anmeldetag: **30.12.2010**

(87) Internationale Veröffentlichungsnummer:
**WO 2011/091942 (04.08.2011 Gazette 2011/31)**

(54) **VERFAHREN UND STEUERVORRICHTUNG ZUR BESTIMMUNG EINER ZUKÜNFTIGEN DREHZAHL**

METHOD AND CONTROL DEVICE FOR DETERMINING A FUTURE ROTATIONAL SPEED

PROCÉDÉ ET DISPOSITIF DE COMMANDE POUR DÉTERMINER UNE VITESSE DE ROTATION FUTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2010 DE 102010001257**

(43) Veröffentlichungstag der Anmeldung:
**05.12.2012 Patentblatt 2012/49**

(73) Patentinhaber: **Robert Bosch GmbH**
**70442 Stuttgart (DE)**

(72) Erfinder:
• CWIK, Matthias
  70197 Stuttgart (DE)
• ROESSLE, Markus
  70199 Stuttgart (DE)
• MAURITZ, Ewald
  71287 Weissach (DE)
• TUMBACK, Stefan
  70469 Stuttgart (DE)

(56) Entgegenhaltungen:
WO-A1-2009/083477    WO-A2-2008/080679
US-B2- 6 873 930

EP 2 529 105 B1

**Beschreibung**

Stand der Technik

Die Erfindung bezieht sich auf ein Verfahren zur Bestimmung einer zukünftigen Drehzahl einer sich drehenden Antriebswelle von einer Brennkraftmaschine während die Brennkraftmaschine nach einem Ausschalten ausläuft, wobei die zukünftige Drehzahl aus einem Verlauf gemessener Drehzahlen berechnet wird. Ferner bezieht sich die Erfindung auf eine Steuervorrichtung, insbesondere für ein Start-Stopp-System eines Kraftfahrzeugs, mit einer Auswerteeinrichtung, insbesondere mit einem Mikrocomputer, zum Berechnen einer zukünftigen Drehzahl aus einem Verlauf der gemessenen Drehzahlen einer Antriebswelle von einer Brennkraftmaschine. Die Erfindung bezieht sich auch auf ein Computerprogrammprodukt.

In der Regel wird eine Startvorrichtung für die Brennkraftmaschine mit einem Startermotor zum Starten mit der Brennkraftmaschine gekoppelt, indem ein Starterritzel des Startermotors in einen Zahnkranz der Brennkraftmaschine eingespurt wird. Dabei ist der Zahnkranz auf einer Antriebswelle der Brennkraftmaschine angeordnet.

Es ist ein Start-Stopp-System für ein Kraftfahrzeug mit einer Brennkraftmaschine bekannt, um bei einem kurzen Halt des Kraftfahrzeugs, beispielsweise an einer roten Ampel, die Brennkraftmaschine auszuschalten und für eine Weiterfahrt wiederzustarten.

Außerdem ist bekannt, die Brennkraftmaschine auszuschalten, indem eine Brennstoffzufuhr, beispielsweise eine Einspritzung, und/oder eine Zündung des Brennstoffs, beendet wird, wobei die Brennkraftmaschine nach dem Ausschalten nicht sofort zum Stehen kommt, sondern in einer charakteristischen Weise ausläuft, nämlich mit einem charakteristischen Drehzahlverlauf der Antriebswelle, der nachfolgend als Auslauf bezeichnet wird. Die Brennkraftmaschine ist mit Zylindern ausgebildet, die jeweils den charakteristischen Drehzahlverlauf bestimmen.

Die WO 2009/083477 A1 beschreibt ein Verfahren zum Ansteuern einer Steuervorrichtung eines Starters von einer Brennkraftmaschine, um in eine auslaufende Brennkraftmaschine bei einem Reflex-Start wieder einzuspuren. Eine allgemeine Gradientenneigung der auslaufenden Drehzahl wird aus mehreren Geschwindigkeitspunkten über einige Zyklen berechnet.

Die DE 10 2008 041 037 beschreibt ein Verfahren einer Steuerung für einen Start-Stopp-Betrieb einer Brennkraftmaschine in einem Kraftfahrzeug zum kurzfristigen Stoppen und Starten der Brennkraftmaschine, die von einer elektrischen Maschine als Starter gestartet wird, wobei von einer Detektionseinrichtung die Position und die Drehzahl einer Kurbelwelle während des Betriebs und nach Ausschalten der Brennkraftmaschine, insbesondere für einen kurzfristigen Stopp, erfasst wird. Ferner wird der Verlauf der Drehzahl der Kurbelwelle nach Ausschalten der Brennkraftmaschine im Voraus an und aus charakteristischen wiederkehrenden Positionen, wie zum Beispiel Totpunkten, der Kurbelwelle aktiv und neu berechnet.

Es ist Aufgabe der Erfindung, ein Verfahren, eine Steuervorrichtung und ein Computerprogrammprodukt der eingangs genannten Art derart weiterzubilden, dass eine zukünftige Drehzahl einer sich drehenden Antriebswelle einer Brennkraftmaschine mit einer möglichst hohen Genauigkeit vorhersagbar ist, insbesondere wenn die Brennkraftmaschine ausgeschaltet wird, also beispielsweise aufgrund einer gestoppten Einspritzung ausläuft.

Offenbarung der Erfindung

Erfindungsgemäß wird die Aufgabe durch den Gegenstand der Patentansprüche 1 bis 3 gelöst.

Der Erfindung liegt der Gedanke zugrunde, dass an verschiedenen Drehpositionen der Antriebswelle gemessene, momentane Drehzahlen ausgewertet werden.

Es ist ein weiterer Gedanke der Erfindung, dass in einer Steuervorrichtung eine Auswerteeinrichtung zum Auswerten von an verschiedenen Drehpositionen der Antriebswelle gemessenen, momentane Drehzahlen ausgebildet ist, und die insbesondere ein zuvor oder nachfolgend beschriebenes Verfahren ausführt.

Der Verlauf $n_v$ gibt als Messwerte die gemessenen Drehzahlen, das heißt eine tatsächliche Drehbewegung der Antriebswelle, insbesondere den Auslauf $n_A$ bei der auslaufenden Brennkraftmaschine, wieder, wobei der Verlauf als Drehzahldaten die gemessenen Drehzahlen gepaart mit zugehörigen Drehpositionsdaten und/oder Zeitinformationen umfasst.

Die nachfolgende Beschreibung ist auf den Auslauf als Spezialfall des Drehzahlverlaufs bezogen formuliert und trifft ebenso auf einen Drehzahlverlauf einer nicht auslaufenden Brennkraftmaschine zu.

Dadurch dass, insbesondere zumindest zwei, vorzugsweise alle während einer Periodendauer gemessenen Drehzahlen ausgewertet werden, wird sowohl der Wert der Drehzahl zu einer jeweiligen Drehposition als auch eine zeitliche Entwicklung erfasst und folglich eine Vorhersage der zukünftigen Drehzahl ermöglicht. So kann die zukünftige Drehzahl aus dem gemessenen Verlauf prognostiziert und der Verlauf der vorher gemessenen Drehzahlen bis zu einem späteren Zeitpunkt hin, insbesondere gemäß einer charakteristischen Form des Verlaufs, fortgeschrieben werden.

Im Übrigen sind die gemessenen Drehzahlen jeweils momentane Drehzahlen der Antriebswelle an der jeweiligen Drehposition, also insbesondere keine mittlere Drehzahlen, die beispielsweise aus einer Zeitdauer für ein periodisches Überstreichen einer bestimmten Drehposition abgeleitet wurden. Vorzugsweise werden zumindest zwei, insbesondere möglichst viele, Drehzahlen mit jeweiligen Drehpositionen innerhalb einer Periode der Drehbewegung der Antriebswelle ausgewertet. So lässt sich mit dem Verlauf die Bewegung der Antriebswelle, insbesondere auch während einer einzelnen Umdrehung, genauer Erfassen und die zukünftige Drehzahl für einen beliebigen späteren Zeitpunkt, insbesondere unabhängig von einer vorgegebenen Drehposition, mit einer höheren Genauigkeit vorhersagen.

Außerdem lassen sich den Auslauf der Brennkraftmaschine bestimmenden Faktoren, insbesondere aktuelle Motorparameter und aktuelle Umgebungsbedingungen, anhand der charakteristischen Form des Verlaufs einfach und exakt berücksichtigen, also eine sehr hohe Genauigkeit bei der Vorhersage der zukünftigen Drehzahl gemäß diesem Verfahren erzielen.

Im Übrigen lassen sich auch kurz- und langfristig variierende Reib- und Lastmomente an der Brennkraftmaschine, beispielsweise aufgrund von elektrischen Verbrauchern oder einer Klimaanlage, ein kurz- und langfristig variierender Saugrohrdruck, der beispielsweise von einer Drosselklappenstellung, einem Luftdruck oder einer Betriebshöhe über dem Meeresspiegel der Brennkraftmaschine abhängig ist, und/oder eine variierende Leckage im Verdichtungszyklus, die beispielsweise durch eine Alterung der Brennkraftmaschine bedingt ist, berücksichtigen, sodass insbesondere motor- und umgebungsspezifische Einflüsse, die sich auf die charakteristische Form des Verlaufs, beispielsweise auf eine Steigung und/oder eine Amplitude einer Oszillation, auswirken, berücksichtigt werden, und die zukünftige Drehzahl somit genauer bestimmbar ist.

Eine mittlere Drehbewegung der Antriebswelle kann also mit einer Oszillation überlagert sein, sodass auch der Verlauf eine Oszillation aufweist, die beispielsweise durch Schwingungen oder aufgrund von Kompressions- und Dekompressionszyklen durch eine Kolbenbewegung, insbesondere motortypabhängig und/oder charakteristisch für die Brennkraftmaschine, verursacht ist. Diese Oszillation kann im Wesentlichen durch eine Energieumwandlung von kinetischer Energie in Lageenergie, nämlich Kompressionsenergie, und umgekehrt bestimmt sein.

Die zukünftige Drehzahl wird bestimmt, während die Brennkraftmaschine nach einem Ausschalten ausläuft. Besonders bei einem Start-Stopp-System, bei dem der Startermotor nach dem Ausschalten der Brennkraftmaschine bereits mit der auslaufenden, also noch drehenden, Brennkraftmaschine gekoppelt werden soll, beispielsweise um einen verzögerungsfreien Wiederstart zu ermöglichen, ist eine genaue Vorhersage der zukünftigen Drehzahl vorteilhaft, um ein sich ebenfalls drehendes Starterritzel mit möglichst geringem Verschleiß oder verschleißfrei möglichst synchron bezüglich einer Umlaufgeschwindigkeit in den Zahnkranz einzuspuren. Außerdem kann ein zukünftiger Zeitpunkt, bei dem die Brennkraftmaschine zum Stillstand kommt, genau bestimmt werden.

Vorzugsweise werden für jeden Auslauf $n_A$ der Brennkraftmaschine möglichst viele Drehzahlen, vorzugsweise mit einer möglichst hohen zeitlichen Dichte, insbesondere zu allen verfügbaren oder zu ausgewählten Ereignispunkten gemessen und mit dem Mikrocomputer verarbeitet. Die Antriebswelle weist ein Geberrad mit Zähnen auf, die mittels eines Sensors erfasst werden. Daraus wird die Position und Drehzahl bezüglich der Zeit ausgewertet. So lässt sich basierend auf dem Verlauf $n_v$ der gemessenen Drehzahlen eine genaue Prognose erstellen, also der Verlauf $n_z$ in die Zukunft, insbesondere für den späteren Zeitpunkt, sicher fortschreiben.

Vorteilhafterweise werden eine Vielzahl von Drehzahlen, insbesondere bei verschiedenen, vorzugsweise beliebigen, Drehpositionen gemessen, und zwar in dieser Reihenfolge zunehmend bevorzugt, zumindest drei, fünf, sieben oder zehn Drehzahlen an jeweils verschiedenen Drehpositionen innerhalb einer Periode der zuvor genannten Oszillation, sodass die Drehbewegung der Antriebswelle genauer bestimmbar, also auch die zukünftige Drehzahl genauer ableitbar ist. Im Übrigen wird die Genauigkeit der zukünftigen Drehzahl auch dadurch erhöht, dass eine Abweichung oder eine Toleranz einer einzelnen gemessenen Drehzahl sich bei einer zunehmend größeren Anzahl von gemessenen Drehzahlen des Verlaufs $n_v$ qualitativ bezüglich der Prognose verbessernd auswirkt. Somit lässt sich die zukünftige Drehzahl für beliebige zukünftige Zeitpunkte, Drehzahlen oder Drehpositionen genauer bestimmen.

Es wird eine Ausgleichsgerade $n_M$ mit einer Steigung vom Verlauf bestimmt wird und die zukünftige Drehzahl wird zumindest aus einem linearen Anteil mit der Steigung abgeleitet.

Mit der Steigung lässt sich eine zeitliche Änderung des Auslaufs besonders einfach, insbesondere mit geringem Rechenaufwand, beschreiben. Auch kann der Verlauf der gemessenen Drehzahlen durch den linearen Anteil mit eben dieser Steigung mit geringem Rechenaufwand zu dem späteren Zeitpunkt hin fortgeschrieben werden, um die zukünftige Drehzahl zu bestimmen. Der lineare Anteil bezeichnet also eine Komponente für die Bestimmung der zukünftigen Drehzahl.

Die Ausgleichsgerade mit der Steigung kann insbesondere aus den gemessenen Drehzahlen über eine Methode der Mittelwertbildung, vorzugsweise über eine Methode der linearen Regression, mit geringem Rechenaufwand genau bestimmt werden, und zwar insbesondere durch den Mikrocomputer. Durch die Mittelwertbildung werden Toleranzen und Abweichungen einzelner gemessener Drehzahlen zumindest teilweise ausgeglichen, sodass die zukünftige Drehzahl genauer bestimmbar ist. Im Übrigen können auch andere bekannte Methoden der Mittelwertbildung angewandt werden.

Dem Auslauf der Brennkraftmaschine kann also durch eine mittlere Ausgleichsgerade eine mittlere Steigung der Drehzahl, insbesondere für ein bestimmten zeitlichen Abschnitt des Verlaufs, zugeschrieben werden. Die mittlere Steigung berücksichtigt momentan auftretende Reib- und Lastmomente an der Brennkraftmaschine, sodass diese vorteilhafterweise durch die genannte Auswertung in die zukünftige Drehzahl einfließen.

Ferner kann die Genauigkeit bei der Bestimmung der zukünftigen Drehzahl bei zeitlich nicht äquidistant gemessenen Drehzahlen des Verlaufs erhöht werden, indem die einzelnen gemessenen Drehzahlen des Verlaufs über eine geeignete Dichtefunktion für die Mittelung gewichtet werden. So lässt sich die Steigung, insbesondere bei zeitlich beliebig gemessenen Drehzahlen, genauer bestimmen, indem gemessene Drehzahlen mit geringer Dichte über der Zeit, also mit größeren zeitlichen Abständen zwischen jeweils zwei Messungen, mit einem höheren Gewichtungsfaktor versehen werden.

Vorzugsweise wird die zukünftige Drehzahl aus dem linearen Anteil mit einem Stützpunkt für den linearen Anteil abgeleitet, der ein Punkt der Ausgleichsgerade entsprechend einem Zeitpunkt einer jüngsten gemessenen Drehzahl ist, die bei der Bestimmung der zukünftigen Drehzahl berücksichtigt wird. Für eine genaue Bestimmung der zukünftigen Drehzahl kann also der Verlauf von dem Stützpunkt aus in die Zukunft fortgeschrieben werden, um eine kurze Vorhersagedauer zu erzielen, nämlich von dem Zeitpunkt dieser jüngsten Drehzahl bis zu dem späteren Zeitpunkt der zukünftigen Drehzahl.

Die zukünftige Drehzahl kann zunehmend genauer bestimmt werden, indem die zuvor und nachfolgend beschriebenen Schritte wiederholt durchgeführt werden, sodass durch eine Mehrzahl von Prognosen der zukünftigen Drehzahl und/oder eine zunehmende Reduzierung der Vorhersagedauer durch weitere, zeitlich näher an dem späteren Zeitpunkt gelegene, gemessene Drehzahlen die zukünftige Drehzahl zunehmend genauer bestimmbar ist. Dabei können die Prognoseschritte und/oder die zukünftige Drehzahl auf festen Winkelschritten der Drehbewegung der Antriebswelle, auf festen Zeitschritten oder auch auf anderen Schritten oder Schrittweiten basieren.

Außerdem kann die Genauigkeit bei der Bestimmung der zukünftigen Drehzahl durch eine Glättung erhöht werden, indem bei einer Mehrzahl von gemessenen Drehzahlen aus verschiedenen Teilmengen der gemessen Drehzahlen zumindest eine weitere Steigung bestimmt wird. Vorzugsweise wird während des Auslaufens der Brennkraftmaschine jeweils eine aktuelle Steigung bestimmt, vorzugsweise bei Vorliegen einer zusätzlichen, zuletzt gemessenen Drehzahl. So lässt sich ferner eine gemittelte Steigung des Verlaufs aus zuvor bestimmten Steigungen bestimmen, und zwar beispielsweise durch einen dreifach gleitenden Mittelwert, der insbesondere bei jeder zusätzlich verfügbaren, insbesondere zuletzt gemessenen Drehzahl aktualisiert wird. Dabei kann die zuletzt gemessene Drehzahl unmittelbar zur Bestimmung der Steigung ausgewertet werden. Vorzugsweise wird, wie später erläutert, mit der zuletzt gemessenen Drehzahl eine geeignete Teilmenge (anderer) gemessener Drehzahlen bestimmt, aus denen die Steigung abgeleitet wird, beispielsweise indem ein Abschnitt des Verlaufs von im Wesentlichen genau einer Periodenlänge der Oszillation bestimmt wird.

Vorzugsweise wird bei einem Verlauf ohne oder nur mit einer geringen Oszillation die Mittelwertbildung über alle gemessenen Drehzahlen erstreckt, um die Genauigkeit der Steigung, also auch der Prognose der zukünftigen Drehzahl, zu erhöhen, indem eine Abweichung oder eine Toleranz einer einzelnen gemessenen Drehzahl mit zunehmender Anzahl der insgesamt berücksichtigten gemessenen Drehzahlen zunehmend ausgeglichen wird.

Wie zuvor genannt, kann der Verlauf eine Oszillation aufweisen. Dabei ist bevorzugt, dass die zukünftige Drehzahl aus Drehzahlen abgeleitet wird, die im Wesentlichen in einem bestimmten Phasenbereich der Oszillation gemessen wurden. So lässt sich ein Einfluss der Oszillation reduzieren, beispielsweise indem nur Drehzahlen aus einem Phasenbereich der Oszillation berücksichtigt werden, die nahe an einer Mittellinie des Verlaufs oder nahe an der Ausgleichsgerade liegen. Als Mittellinie wird eine Kurve bezeichnet, die dem um die Oszillation bereinigten Verlauf entspricht. Vorzugsweise werden Drehzahlen aus einem Phasenbereich mit einer positiven oder mit einer negativen Amplitude der Oszillation oder aus einem Phasenbereich mit positiver und, beidseitig anschließend, negativer Amplitude oder mit negativer und, beidseitig anschließend, positiver Amplitude ausgewertet. So lässt sich eine Symmetrie der Oszillation berücksichtigen.

Insbesondere falls die gemessenen Drehzahlen nicht zufällig, sondern systematisch um die Mittellinie streuen, werden vorzugsweise gemessenen Drehzahlen aus einem ausgesuchten, geeigneten Phasenbereich zur Bestimmung der Steigung herangezogen und nicht alle verfügbaren. Dabei wird der Phasenbereich vorzugsweise so gewählt, dass er in gleichem Maße gemessene Drehzahlen über wie auch unter der Mittellinie berücksichtigt, um die Steigung für den linearen Anteil bezüglich der Mittellinie genau zu beschreiben und die Genauigkeit für die Prognose der zukünftige Drehzahl zu erhöhen, und zwar mit geringer Verfälschung durch die Oszillation.

Erfindungsgemäß wird die zukünftige Drehzahl aus Drehzahlen abgeleitet, die gemeinsam einen zeitlichen Abschnitt des Verlaufs überspannen, der einer, vollständigen Periodendauer der Oszillation entspricht. So lässt sich der Einfluss der Oszillation einfach reduzieren, da eine Periode, also auch zwei oder mehrere Perioden, gleichermaßen gemessene Drehzahlen über- und unterhalb der Mittellinie umfasst, sodass sich die jeweiligen Abweichungen der Drehzahlen von der Mittellinie zumindest teilweise kompensieren. Dabei beginnt die Periode bei einer Drehposition, bei der die momentane Drehzahl ein Extremum, beispielsweise ein Maximum oder ein Minimum, gegenüber der Mittellinie aufweist, und erstreckt sich bis zu einer Drehposition, bei der die Drehzahl ein nachfolgendes gleiches Extrema, beispielsweise ein Maximum beziehungsweise ein Minimum, aufweist. So lässt sich bei einer Oszillation eine genaue Anpassung der mittleren Ausgleichsgerade an die Mittellinie, also eine genaue Bestimmung der Steigung, erzielen, insbesondere durch eine Methode der linearen Regression.

Gemäß einem weiteren Verfahren ist bevorzugt, dass ältere Drehzahlen bei der Bestimmung der zukünftigen Drehzahl verworfen werden, insbesondere indem eine älteste berücksichtigte Drehzahl höchstens um eine bestimmte Dauer älter als eine jüngste berücksichtigte Drehzahl ist. So lässt sich bei einem zeitlich gekrümmten Verlauf die zukünftige Drehzahl genauer bestimmen, indem ein jüngerer, also aktueller, Abschnitt des Verlaufs ausgewertet wird. Dabei kann sowohl eine Krümmung des Verlaufs von flach nach steiler, beispielsweise aufgrund von zeitlich verzögerter Reduzierung der Einspritzmenge beim Abstellen des Motors, oder von steiler nach flacher, beispielsweise aufgrund viskoser Reibung, berücksichtigt werden.

Außerdem ist dadurch die Steigung des gekrümmten Verlaufs, insbesondere abschnittsweise, genauer bestimmbar, indem ein ausgewählter charakteristischer Drehzahlverlauf, also ein zeitlicher Abschnitt von der Länge der bestimmten Dauer, berücksichtigt wird, also eine lokale Steigung des gekrümmten Verlaufs bestimmt wird. Dabei wird die bestimmte Dauer möglichst kurz, entsprechend einer Periodendauer der Oszillation, gewählt, sodass die Steigung und der daraus abgeleitete lineare Anteil den gekrümmten Verlauf, abschnittsweise, möglichst genau beschreiben.

Vorzugsweise ist die jüngste, bei der Bestimmung der zukünftigen Drehzahl berücksichtigte Drehzahl jünger als eine Periodendauer einer Oszillation des Verlaufs. Die jüngste berücksichtigte Drehzahl ist also von einer zuletzt gemessenen Drehzahl weniger als eine Periodendauer zeitlich beabstandet, sodass nur jüngere gemessene Drehzahlen, insbesondere aus einer jüngsten, vollständig durch Messwerte erfassten Periode der Oszillation, für eine aktuelle und genaue Bestimmung der zukünftigen Drehzahl, vorzugsweise als Stützpunkte, berücksichtigt werden.

Die zukünftige Drehzahl zumindest aus einem oszillierenden Anteil abgeleitet wird. Wie zuvor genannt, kann der Verlauf eine Oszillation aufweisen, die dann mittels des oszillierenden Anteils bei der Bestimmung der zukünftigen Drehzahl berücksichtigt wird, um deren Genauigkeit zu erhöhen. Der oszillierenden Anteil bezeichnet also eine Komponente für die Bestimmung der zukünftigen Drehzahl, wobei vorzugsweise der Verlauf mit einer Überlagerung des linearen und des oszillierenden Anteils in die Zukunft fortgeschrieben wird.

Der oszillierende Anteil wird dabei aus einer Oszillationskennkurve abgeleitet, die beispielsweise in einem Speicher für den Mikrocomputer gespeichert ist. So lässt sich mit geringem Rechenaufwand eine für die jeweilige Brennkraftmaschine charakteristische Oszillation der Drehbewegung der Antriebswelle berücksichtigen.

Dabei kann die Oszillationskennkurve als eine, insbesondere normierte, für die Brennkraftmaschine spezifische Energietransformationskennlinie ausgebildet sein, die beispielsweise als Nachschlage-Tabelle zur Verfügung gestellt wird. Die Energietransformationskennlinie gibt in Abhängigkeit von einer Drehposition der Antriebswelle, also beispielsweise in Abhängigkeit von einem Kurbelwellenwinkel, an, welcher Anteil einer maximalen Lageenergie gerade als kinetische Energie an der Antriebswelle umgesetzt ist. Somit charakterisiert die Energietransformationskennlinie eine zyklisch stattfindende Energieumwandlung von Lageenergie in kinetische Energie und umgekehrt. Die Minima der Energietransformationskennlinie liegen typischerweise bei Positionen entsprechend den oberen Zündtotpunkten der Brennkraftmaschine, da hier die in der Kompression gespeicherte Energie maximal ist und die kinetischen Energie minimal klein ist.

Ferner wird der oszillierende Anteil aus einer drehzahlabhängigen Amplitudenkennlinie abgeleitet.

Dadurch kann berücksichtigt werden, dass eine Maximalamplitude der Oszillation des Verlaufs drehzahlabhängig ist, sodass die zukünftige Drehzahl nicht nur für wenige ausgezeichnete Punkte, sondern für beliebige Zeit-, Winkel- oder Drehzahlschritte vorausberechnet werden kann, und zwar insbesondere auch bei rasch abnehmenden Drehzahlen der Antriebswelle. Im Übrigen kann die Amplitudenkennlinie für die Brennkraftmaschine spezifisch ausgebildet sein und in einem Speicher für einen Mikrocomputer, beispielsweise als Nachschlage-Tabelle, als Standardamplitudenkennlinie gespeichert sein.

Die Stärke der Oszillation, also die Maximalamplitude, kann von einem momentanen Saugrohrdruck, nämlich von einem Schließgrad der Drosselklappe, während des Auslaufs abhängen, wobei bei manchen Bauformen der Brennkraftmaschine nur eine geringe, insbesondere auch vernachlässigbare, und bei anderen eine starke Oszillation auftritt. Die Einflüsse werden dann durch den oszillierenden Anteil bei der Bestimmung der zukünftigen Drehzahl zur Erhöhung der Genauigkeit der Prognose berücksichtigt.

Es ist bevorzugt, dass der oszillierende Anteil aus der Standardamplitudenkennlinie mittels einer, vorzugsweise festgelegten und/oder einfachen, Rechenvorschrift abgeleitet wird, insbesondere wobei die Oszillation des Verlaufs der gemessenen Drehzahlen erfasst wird und daraus eine Amplitudenkorrekturstufe abgeleitet wird. Wie zuvor genannt, liefert die Standardamplitudenkennlinie eine Information über die Maximalamplitude der Oszillation des Verlaufs, und zwar in Abhängigkeit von einer Drehzahl der Brennkraftmaschine. Um den Verlauf genauer zu beschreiben und ihn mit höherer Genauigkeit, wie zuvor und nachfolgend beschrieben, zur Bestimmung der zukünftigen Drehzahl fortzuschreiben, können die Einflüsse, die sich auf die Maximalamplitude auswirken, mittels ausgewählter Amplitudenkorrekturstufen berücksichtigt werden, indem der oszillierende Anteil unter Anwendung der festgelegten einfachen Rechenvorschrift entsprechend der Amplitudenkorrekturstufe aus der Standardamplitudenkennlinie abgeleitet wird. Die Amplitudenkorrekturstufe ermöglicht eine einfache und ressourcenschonende Berechnung des oszillierenden Anteils aus der Standardamplitudenkennlinie mittels der der Amplitudenkorrekturstufe zugeordneten Rechenvorschrift.

Um die Amplitudenkorrekturstufe exakt und möglichst einfach, nämlich insbesondere ohne eine aufwendige Modellierung der Einflüsse, zu bestimmen, kann eine tatsächliche Maximalamplitude der Oszillation des Verlaufs der gemessenen Drehzahlen bestimmt werden und daraus die aktuelle tatsächliche Amplitudenkorrekturstufe, insbesondere durch einen einfachen Vergleich, abgeleitet werden. Somit muss nur eine einzige Standardamplitudenkennlinie verfügbar sein, um den oszillierende Anteil in Abhängigkeit von aktuellen Einflüssen mittels der Rechenvorschrift drehzahlabhängig anzupassen.

Die Aufgabe wird auch durch ein Computerprogrammprodukt gelöst, das in einen Programmspeicher mit Programmbefehlen eines Mikrocomputers ladbar ist, um alle Schritte eines zuvor oder nachfolgend beschriebenen Verfahrens auszuführen, insbesondere wenn das Computerprogrammprodukt in der Steuervorrichtung ausgeführt wird. Dabei ist der Mikrocomputer vorzugsweise Bestandteil der Steuervorrichtung, wobei die Steuervorrichtung, insbesondere bei einer Mehrzahl Steuergeräten des Systems, auch eine Mehrzahl Mikrocomputer und auch Speicher, sowie eine Mehrzahl Computerprogrammprodukte oder auch ein auf die Mehrzahl Steuergeräte verteilt realisiertes Computerprogrammprodukt aufweisen kann. Das Computerprogrammprodukt erfordert nur wenige oder keine zusätzlichen Bauteile in der Steuervorrichtung und lässt sich vorzugsweise als ein Modul in einer bereits vorhandenen Steuervorrichtung implementieren. Das Computerprogrammprodukt hat den weiteren Vorteil, das es leicht an individuelle und bestimmte Kundenwünsche anpassbar ist, sowie eine Verbesserung oder Optimierung einzelner Verfahrensschritte mit geringem Aufwand kostengünstig möglich ist.

Es versteht sich, dass die vorstehend genannten und nachstehend noch zu erläuternden Merkmale nicht nur in der jeweils angegebenen Kombination, sondern auch in anderen Kombinationen verwendbar sind.

Kurze Beschreibung der Zeichnungen

Die Erfindung wird im Folgenden unter Bezugnahme auf die Zeichnungen näher erläutert. Es zeigen:

Fig. 1          einen Schaltplan mit einer Steuervorrichtung für ein Start-Stopp-System,

Fig. 2          ein Flussdiagramm eines Verfahren zum Betreiben der Steuervorrichtung,

Fig. 3 und 4    ein Zeit-Drehzahl-Diagramm einer auslaufenden Brennkraftmaschine,

Fig. 5          ein Standardamplitudenkennlinien-Diagramm,

Fig. 6          eine normierte Oszillationskennkurve und

Fig 7           ein Zeit-Drehzahl-Diagramm einer auslaufenden Brennkraftmaschine mit Bestimmung einer zukünftigen Drehzahl.

Ausführungsformen der Erfindung

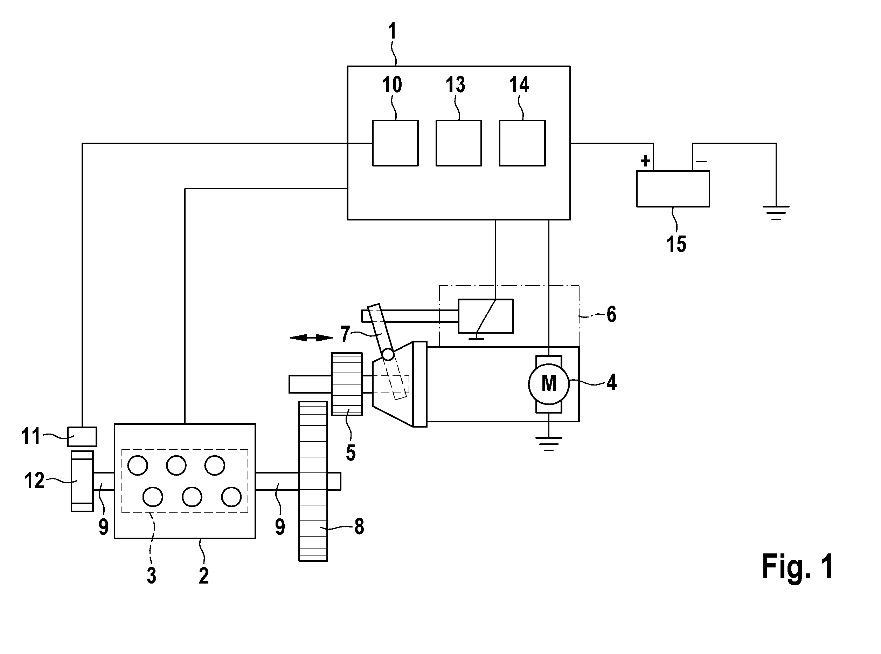

Die Fig. 1 zeigt einen Schaltplan mit einer Steuervorrichtung 1 für ein Start-Stopp-System eines Kraftfahrzeugs und mit einer Brennkraftmaschine 2 mit sechs Zylindern 3. Das Start-Stopp-System schaltet bei einem kurzen Halt des Kraftfahrzeugs, beispielsweise an einer roten Ampel, die Brennkraftmaschine 2 aus, indem eine Brennstoffzufuhr unterbrochen wird und startet für eine Weiterfahrt die Brennkraftmaschine 2 wieder. Dazu umfasst das Start-Stopp-System eine Startvorrichtung für die Brennkraftmaschine 2 mit einem Startermotor 4, der zum Starten mit der Brennkraftmaschine 2 gekoppelt wird, indem ein Starterritzel 5 mittels eines Starterrelais 6 über einen Hebel 7 in einen Zahnkranz 8 der Brennkraftmaschine 2 eingespurt wird, wobei der Zahnkranz 8 auf einer Antriebswelle 9 der Brennkraftmaschine 2 ausgebildet ist.

Die Steuervorrichtung 1 umfasst auch eine Messvorrichtung 10 zum Messen von momentanen Drehzahlen $n_s$, $n_p$ der Antriebswelle 9 mit einem Drehzahlsensor 11, der die momentanen Drehzahlen $n_s$, $n_p$ mit Hilfe eines an der Antriebswelle 9 angeordneten Zahnrades 12 an verschiedenen Drehpositionen $\varphi$ der Antriebswelle 9, nämlich jeweils an einer Zahnposition $\varphi_z$ des Zahnrades 12 erfasst. Bei einer alternativen Steuervorrichtung 1 sind momentane Drehzahlen $n_s$, $n_p$ mit den Drehpositionen $\varphi$ von einer externen Messvorrichtung übermittelt und empfangbar.

Außerdem umfasst die Steuervorrichtung 1 als Auswerteeinrichtung einen Mikrocomputer 13 und einen Speicher 14 mit einem Computerprogrammprodukt zum Ausführen der nachfolgend beschriebenen Verfahrensschritte, insbesondere zum Bestimmen einer zukünftigen Drehzahl n, nämlich für einen späteren Zeitpunkt $t_0$, aus einem Verlauf $n_v$ der gemessenen Drehzahlen $n_s$, $n_p$.

Die Steuervorrichtung 1 wird mit einer Batterie 15 mit elektrischer Energie versorgt. Der Startermotor 4 und das Starterrelais 6 werden von der Steuervorrichtung 1 mittels nicht näher dargestellten Treiberschaltungen angesteuert und mit elektrischer Leistung aus der Batterie 15 versorgt.

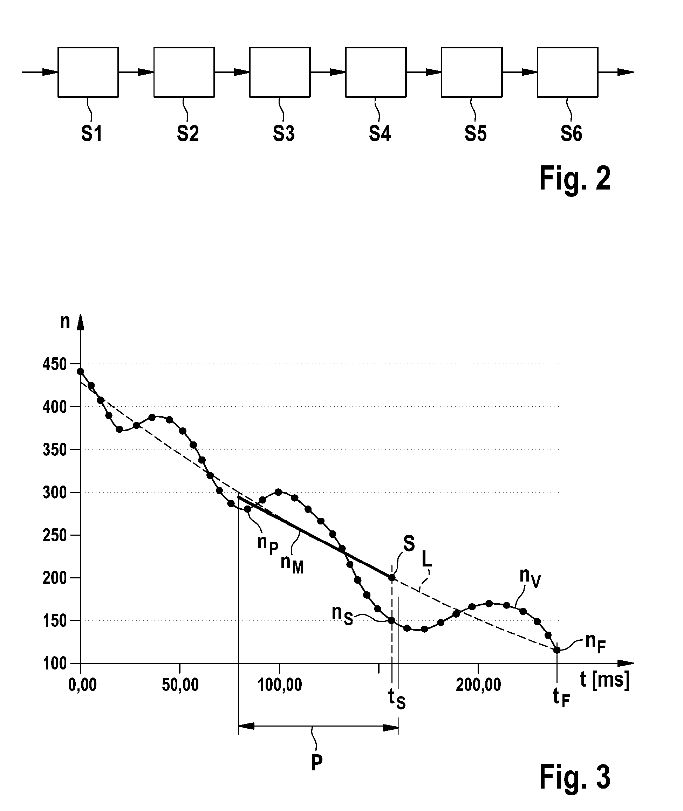

Die Fig. 2 zeigt ein Flussdiagramm eines Verfahrens zum Betreiben der Steuervorrichtung 1 gemäß der Fig. 1.

In einem Schritt S1 wird die Brennkraftmaschine 2 aufgrund einer Start-Stopp-Betriebsstrategie bei einem Halt des Kraftfahrzeugs von der Steuervorrichtung 1 ausgeschaltet, indem die Brennstoffzufuhr unterbrochen wird. Daraufhin läuft die zuvor betriebene Brennkraftmaschine 2 nach dem Ausschalten aus, und zwar mit einem Auslauf $n_A$, der eine tatsächlichen Drehbewegung der Antriebswelle 9 beim Auslaufen bezeichnet und in den Fig. 3, 4 und 7 gezeigt ist.

Gemäß einer bestimmten Start-Stopp-Betriebsstrategie soll zu einem späteren Zeitpunk $t_0$, und zwar noch während des Auslaufs $n_A$, also vor einem Stillstand der Brennkraftmaschine 2, das Starterritzel 5 in den sich auf der Antriebswelle 9 drehenden Zahnkranz 8 eingespurt werden, um ein verzögerungsfreies Wiederstarten der Brennkraftmaschine 2 für eine Weiterfahrt des Kraftfahrzeugs zu ermöglichen. Dazu muss das Starterritzel 5 zu dem Zeitpunkt $t_0$ im Wesentlichen synchron, also mit synchronen Umfangsgeschwindigkeiten, zu dem Zahnkranz 8 drehen, um verschleißarm einzuspuren. Dementsprechend soll, wie nachfolgend erläutert, eine zukünftige Drehzahl $n_0$ für den zukünftigen Zeitpunkt $t_0$ bestimmt werden. So lässt sich letztendlich in Abhängigkeit von der Prognose der zukünftigen Drehzahl $n_0$ der Startermotor 4 mit dem Starterritzel 5 und das Starterrelais 6 zum Einspuren rechtzeitig vor dem Zeitpunkt $t_0$ geeignet ansteuern, um zu dem Zeitpunkt $t_0$ möglichst synchron einzuspuren.

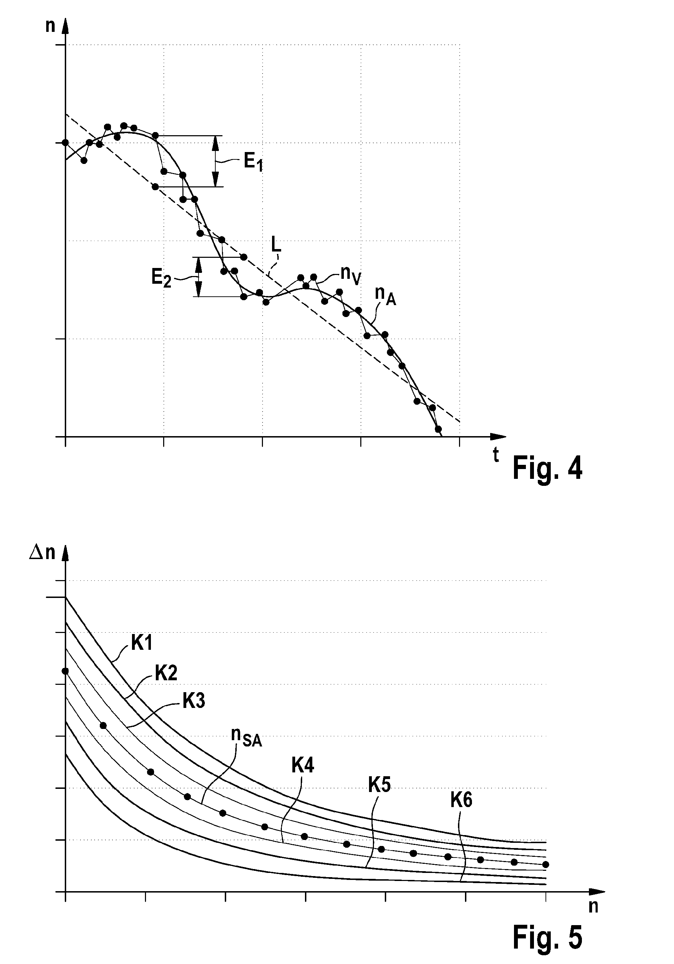

In einem Schritt S2 wird, wie in der Fig. 4 gezeigt, der Auslauf $n_A$ als Verlauf $n_v$ reproduziert, indem mit dem Drehzahlsensor 11 an verschiedenen Drehpositionen φ der Antriebswelle 9 jeweils momentane Drehzahlen $n_s$, $n_p$ von der Steuervorrichtung 1 mittels der Messervorrichtung 10 gemessen und errechnet werden. Dabei stehen als Daten die Drehzahlen $n_s$, $n_p$ gepaart mit Zeitinformationen und Drehpositionsinformationen zur Verfügung. Vorzugsweise werden für jeden Auslauf $n_A$ alle verfügbaren Daten erfasst und in dem Mikrocomputer 10 verarbeitet.

Um die zukünftige Drehzahl $n_o$ zu dem späteren Zeitpunkt $t_0$ aus dem Verlauf $n_v$ der vorher gemessenen Drehzahlen $n_s$, $n_p$ abzuleiten, wird der Verlauf $n_v$ in die Zukunft fortgeschrieben. Dazu wird in einem Schritt S3 eine Ausgleichsgerade $n_M$ mit einer Steigung m des Verlaufs $n_v$ mittels einer linearen Regression über ausgewählte Drehzahlen $n_s$, $n_p$, wie in der Fig. 3 erläutert, bestimmt.

Der Auslauf $n_A$ ist bestimmt durch Reib- und Lastmomente der Brennkraftmaschine 2, die eine mit der Zeit t zunehmend flachere, also gekrümmte Form des Verlaufs $n_v$ bedingen, sowie durch Kompressions- und Dekompressionszyklen der Zylinder 3, die zu einer Oszillation des Verlaufs $n_v$ führen. Durch die Ausgleichsgerade $n_M$ mit der Steigung m lässt sich zwar eine Mittellinie L, nämlich die um die Oszillation bereinigte Form des Verlaufs $n_v$, zumindest abschnittsweise aufgrund der Krümmung, genau beschreiben. Zusätzlich muss jedoch auch die Oszillation, wie nachfolgend ab einem Schritt S4 erläutert, beim Fortschreiben des Verlaufs $n_v$ berücksichtigt werden.

In dem Schritt S4 wird die Oszillation des Verlaufs $n_v$ anhand maximaler Amplituden $E_1$, $E_2$ bestimmt, die in der Fig. 4 dargestellt sind.

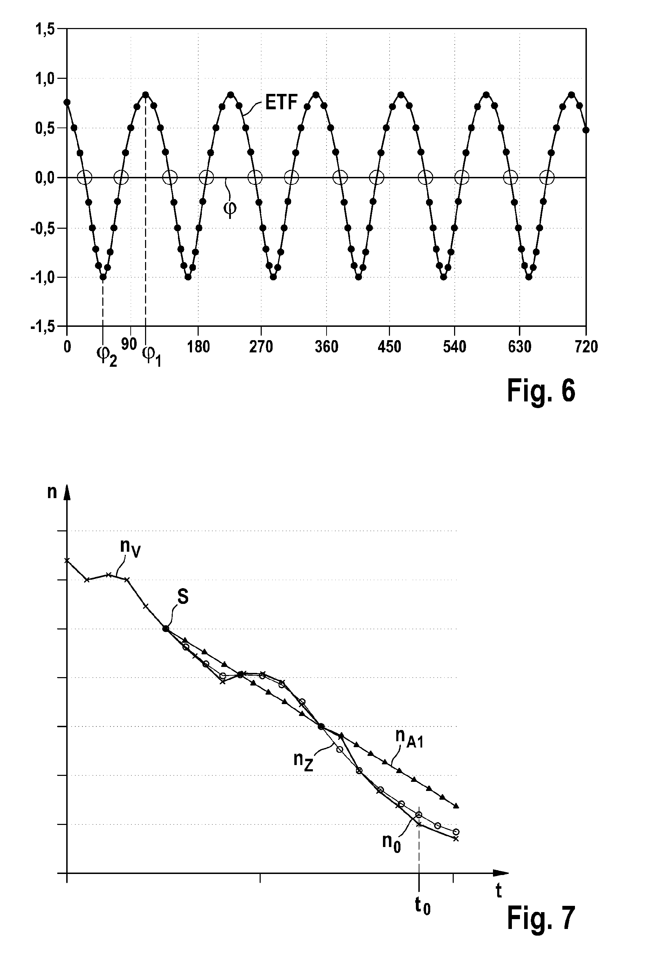

In einem Schritt S5 wird ein oszillierender Anteil aus einer in der Fig. 6 dargestellten normierten Oszillationskennkurve ETF und einer in der Fig. 5 gezeigten Standardamplitudenkennlinie $n_{SA}$ abgeleitet. Dabei wird die normierte Oszillationskennkurve ETF mittels der Standardamplitudenkennlinie $n_{SA}$ drehzahlabhängig skaliert, und zwar unter Verwendung einer einfachen Rechenvorschrift entsprechend einer jeweiligen Amplitudenkorrekturstufe. So werden momentane Einflüsse, die sich auf eine Amplitude der Oszillation auswirken, wie beispielsweise ein Saugrohrdruck, bei der Skalierung berücksichtigt.

Die passende Amplitudenkorrekturstufe wird durch einen Vergleich bestimmt, wobei die Amplitudenkorrekturstufe sich aus einer kleinsten Abweichung zwischen der zuvor gemessenen maximalen Amplitude $E_1$, $E_2$ und den mittels der entsprechenden einfachen Rechenvorschriften aus der Standardamplitudenkennlinie $n_{SA}$ berechneten Werten ergibt. Eine Amplitudenkorrekturstufe entspricht also einer festgelegten Rechenvorschrift, die insbesondere als eine näherungsweise Berechnung mit einer Multiplikation und einem additiven Term ausgebildet ist. Vorzugsweise wird jeweils abhängig von der entsprechenden Drehzahl n immer wieder eine passende Amplitudenkorrekturstufe bestimmt und so die Genauigkeit des oszillierenden Anteils verbessert.

In einem Schritt S6 wird, wie in der Fig. 7 gezeigt, zur Bestimmung der zukünftigen Drehzahl $n_0$ der Verlauf $n_v$ in die Zukunft fortgeschrieben, und zwar mit einem linearen Anteil $A_1$, dem der oszillierende Anteil überlagert wird.

Die Fig. 3 zeigt ein Zeit-Drehzahl-Diagramm mit dem Verlauf $n_v$ der gemessenen Drehzahlen $n_s$, $n_p$, wobei in der Darstellung die Drehzahl n gegenüber einer Zeitachse t aufgetragen ist. Zur besseren Übersichtlichkeit sind exemplarisch nur die beiden Drehzahlen $n_s$ und $n_p$ und eine jüngste, nämlich zu einem Zeitpunkt $t_F$ von der Messvorrichtung 10 zeitlich zuletzt gemessene, Drehzahl $n_F$ benannt. Im Übrigen weist der Verlauf $n_v$ die Oszillation auf, die im Wesentlichen durch eine Bewegung der Zylinder 3, wie zuvor beschrieben, bedingt ist. Ferner ist die Mittellinie L des Verlaufs $n_v$ gestrichelt dargestellt.

Die Ausgleichsgerade $n_M$ wurde über eine Methode der Mittelwertbildung, nämlich durch eine lineare Regression, über die gemessenen Drehzahlen von $n_p$ bis $n_s$ berechnet. Die Steigung m der Ausgleichsgerade $n_M$ gibt eine Steigung der Mittellinie L in dem gezeigten Ausschnitt des Verlaufs $n_v$, insbesondere während einer Periodendauer P, mit hoher Genauigkeit wieder.

Die mittlere Ausgleichsgerade $n_M$ lässt sich als eine Geradengleichung mit der Formel $n = m * t + c$ darstellen, und zwar mit der Steigung m, der Zeit t und einer Konstanten c.

Werden mit der Variable i die einzelnen gemessenen Drehzahlen $n_i$ fortlaufend nummeriert, so ergibt sich für einen p-ten Datensatz mit der Methode der kleinsten Fehlerquadrate:

$$m_p = \frac{(\sum\limits_{i=1}^{p} t_i * n_i) - p * \bar{t}_p * \bar{n}_p}{(\sum\limits_{i=1}^{p} t_i^2) - p * (\bar{t}_p)^2} \quad ,$$

$$c_p = \bar{n}_p - m * \bar{t}_p$$

mit

$$\bar{t}_p = \frac{(p-1) * \bar{t}_{p-1} + t_p}{p} \quad ,$$

$$\bar{n}_p = \frac{(p-1) * \bar{n}_{p-1} + n_p}{p}$$

Dabei ergibt sich die Drehzahl n der Ausgleichsgerade $n_M$ zum Zeitpunkt $t_p$ des p-ten Datensatzes aus der Formel $n = m_p * t_p + c_p$.

Da die Drehzahlen $n_s$, $n_p$ nicht zufällig um die Mittellinie L streuen, sondern entsprechend der Oszillation zu einem gewissen Maß in einem funktionalen, sinus-ähnlichen, Zusammenhang stehen, werden bei der linearen Regression nur ausgewählte Drehzahlen berücksichtigt, und zwar die Drehzahlen von $n_p$ bis $n_s$, die einen solchen Abschnitt des Verlaufs $n_v$ überspannen, der im Wesentlichen genau einer Periodendauer P der Oszillation entspricht. Wie in der Fig. 3 gezeigt ist, ist beispielsweise der Abschnitt so gewählt, dass er bei einem Minimum der Oszillation startet und sich bis zu dem nächsten Minimum erstreckt. Dabei ist die gemessene Drehzahl $n_p$ die erste, also älteste, und die Drehzahl $n_s$ die letzte, also jüngste, gemessene Drehzahl, die bei der linearen Regression berücksichtigt wird, wobei einige Drehzahlen über $n_s$ hinaus, in diesem Beispiel bis $n_F$, gemessen werden, um die Periode zu identifizieren. Durch eine solche Auswahl der zu berücksichtigenden Drehzahlen $n_p$ bis $n_s$ wird trotz der Oszillation die Steigung durch eine lineare Regression genau bestimmt und insbesondere wird eine rechenaufwendige Kompensation der sinus-ähnlichen Oszillation vermieden. Bei einem alternativen Verfahren wird die lineare Regression von einem Maximum bis zu einem nachfolgenden Maximum durchgeführt. Im Übrigen sind, nicht nur in der Fig. 3, als alternative Verfahren bezüglich der zuvor und nachfolgend gezeigten Merkmale die Minima beziehungsweise Maxima der Oszillation vertauschbar.

Ferner wird ein Stützpunkt S auf der Ausgleichsgerade $n_M$ zu einem Zeitpunkt $t_s$ der jüngsten berücksichtigten Drehzahl $n_s$ bestimmt, der, wie in der Fig. 7 erläutert, als Stützpunkt S zum Fortschreiben des Verlaufs $n_v$ in die Zukunft dient. Dabei ist die jüngste berücksichtige Drehzahl $n_s$ weniger als eine Periodendauer P älter als die zuletzt gemessene Drehzahl $n_F$. Somit steht mittels der Ausgleichsgerade $n_M$ eine aktuelle Information über den tatsächlichen Auslauf $n_A$ der Brennkraftmaschine 2 zur Verfügung, um die zukünftige Drehzahl $n_0$ möglichst genau zu bestimmen.

Es ist also die älteste Drehzahl $n_p$, die zur Bestimmung der zukünftigen Drehzahl $n_0$ berücksichtigt wird, höchstens eine Periodendauer P der Oszillation des Verlaufs $n_v$ von der jüngsten Drehzahl $n_s$, die zur Bestimmung der zukünftigen Drehzahl $n_0$ berücksichtigt wird, zeitlich beabstandet. So lässt sich die Mittellinie L abschnittsweise, nämlich für den zeitlichen Abschnitt der Periodendauer P, sehr genau durch die Ausgleichsgerade $n_M$ beschreiben, und zwar insbesondere bei einem gekrümmten Verlauf der Mittellinie L. Es werden also ältere gemessene Drehzahlen, die vor der Drehzahl $n_p$ erfasst wurden, verworfen und von der linearen Regression nicht mehr erfasst. Somit steht immer eine aktuelle Steigung und auch ein aktueller Stützpunkt S für eine genaue Bestimmung der zukünftigen Drehzahl $n_0$ zur Verfügung.

Bei einem bevorzugten Verfahren wird eine Verschachtelung der linearen Regressionsrechnung angewendet, wobei mehrere, aufeinanderfolgende Regressionen, wie zuvor beschrieben, durchgeführt werden, die beispielsweise alternierend bei aufeinanderfolgenden Minima und Maxima der Oszillation starten. So lässt sich in einer höheren zeitlichen Dichte, also circa jede halbe Periodendauer P, eine Ausgleichsgerade $n_M$, also die Steigung m und der Stützpunkt S, bestimmen.

Bei einem weiteren bevorzugten Verfahren wird jeweils über zuletzt bestimmten Steigungen m der Ausgleichsgeraden $n_M$ mit einer Methode des gleitenden Mittelwertes, insbesondere mit einem dreifach gleitenden Mittelwert, gemittelt, um mit einer Glättung der jeweils durch Regression berechneten Steigungen m die zukünftige Drehzahl $n_0$ genauer zu bestimmen.

Bei einem weiteren bevorzugten Verfahren werden bei zeitlich nicht äquidistanten gemessenen Drehzahlen $n_s$, $n_p$ des Verlaufs $n_v$ die einzelne Messwerte über eine geeignete Dichtefunktion gewichtet, um die Genauigkeit der Mittelwertbildung für die Ausgleichsgerade $n_M$ zu erhöhen. Vorzugsweise werden dabei bereichsweise, wobei ein Bereich im Positiven der Oszillation bezüglich der Mittellinie L beispielsweise umrahmt ist von Bereichen im Negativen, die Werte so ausbalanciert, dass Messwerte mit geringerer Dichte, also größeren zeitlichen Abständen, mit einem höheren Gewichtungsfaktor versehen werden.

Bei einem bevorzugten Verfahren wird der Einfluss der Oszillation auf die Prognosegenauigkeit dadurch verringert, dass anhand einer Oszillationskennkurve ETF, die in der Fig. 6 gezeigt ist, ausgesuchte Bereiche des Verlaufs bestimmt werden und nur gemessene Drehzahlen $n_s$, $n_p$ aus diesen Bereichen für die Regressionsrechnung verwendet werden. So lässt sich die Genauigkeit bei der Bestimmung der Ausgleichsgeraden $n_M$ erhöhen, beispielsweise indem stärker von der Mittellinie abweichende Drehzahlen $n_s$, $n_p$ vernachlässigt werden.

Bei einem alternativen Verfahren werden bei einer geringen Oszillation der linearen Regressionsrechnung alle zur Verfügung stehende gemessene Drehzahlen $n_s$, $n_p$ zugeführt. So lässt sich die Genauigkeit durch eine größere Datenmenge erhöhen.

Die Fig. 4 zeigt ein Zeit-Drehzahl-Diagramm mit einem vergrößerten Ausschnitt der Fig. 3. Dabei zeigt die Fig. 4 den tatsächlichen Auslaufs $n_A$, sowie dessen Erfassung durch den Verlauf $n_v$ der gemessenen Drehzahlen $n_s$, $n_p$. Außerdem zeigt die Fig. 4, wie die Extremaamplituden $E_1$, $E_2$ der Oszillation des Verlaufs $n_v$ um die Mittellinie L bestimmt werden. Die Extremaamplituden $E_1$, $E_2$ weisen jeweils die größten Abweichungen des Verlaufs $n_v$ von der Mittellinie L auf, und zwar sowohl nach oben im Fall eines Maximums $E_1$ der Oszillation, als auch nach unten im Fall eines Minimums $E_2$ der Oszillation.

Die Fig. 5 zeigt ein Standardamplitudenkennlinien-Diagramm mit einer Standardamplitudenkennlinie $n_{SA}$, die eine Abhängigkeit der Extremaamplituden $E_1$, $E_2$ als Drehzahlkorrektur $\Delta n$ von der Drehzahl n darstellt. Die Standardamplitudenkennlinie $n_{SA}$, also ihr Verlauf, ist Motortyp-spezifisch für die jeweilige Brennkraftmaschine 2. Sie ist als eine Nachschlage-Tabelle in dem Speicher 14 hinterlegt, sodass sie bei der Bestimmung der zukünftigen Drehzahl $n_0$ mit dem Mikrocomputer 13 mit geringem Rechenaufwand berücksichtigbar ist. So lässt sich insbesondere eine aufwendige Berechnung vermeiden.

Ferner sind ober- und unterhalb der Standardamplitudenkennlinie $n_{SA}$ zur Veranschaulichung unterschiedliche Kurven $K_1$ bis $K_6$ dargestellt, die aus der Standardamplitudenkennlinie $n_{SA}$ nach den definierten Rechenvorschriften gemäß unterschiedlicher Amplitudenkorrekturstufen berechnet wurden. Die passende Amplitudenkorrekturstufe wird, wie zuvor beschrieben, durch einen Vergleich bestimmt, nämlich für eine kleinste Abweichung zwischen der in der Fig. 4 gezeigten, gemessenen tatsächlichen Extremaamplituden $E_1$, $E_2$ und entsprechenden Werten der gezeigten Kurven $K_1$ bis $K_6$ bei der entsprechenden Drehzahl n.

Bei einem bevorzugten Verfahren analysiert ein Lernalgorithmus nach einem festgelegten Schema, beispielsweise nach einem festgelegten Zeitraum, Kilometerleistung und/oder Anzahl von Start-Stopp-Zyklen, insbesondere abhängig von Umgebungs-und/oder Betriebsbedingungen, sowie nach beliebigen Kombinationen von diesen Kriterien, die in der Vergangenheit genutzten Korrekturmaßnahmen und leitet daraus eine neue Rechenvorschrift für eine neue Amplitudenkorrekturstufe ab. Bei einem weiter bevorzugten Verfahren wird von dem Lernalgorithmus auch eine neue, angepasste Standardamplitudenkennlinie $n_{SA}$ zur weiteren Verwendung errechnet.

Die Fig. 6 zeigt eine normierte Oszillationskennkurve ETF, als eine für die Brennkraftmaschine 2 charakteristische Energietransformationskennlinie, die eine Drehzahlamplitude normiert auf Eins in Abhängigkeit von einer Drehposition φ der Antriebswelle 9 angibt. Die Oszillationskennkurve ETF beschreibt die Form der Oszillation des Verlaufs $n_v$, und zwar nur qualitativ, da sie auf Eins normiert ist. Dabei gibt sie winkeltreu an, welcher Anteil einer maximalen Lageenergie gerade als kinetische Energie an der Antriebswelle 9 umgesetzt ist, das heißt die Oszillationskennkurve ETF charakterisiert die zyklisch stattfindende Energieumwandlung von Lageenergie in kinetische Energie und umgekehrt. Die Minima $\varphi_2$ der Oszillationskennkurve ETF liegen typischerweise bei den Zünd-OT-Positionen des Motors. Dort ist die in der Kompression gespeicherte Energie maximal und fehlt somit als Beitrag zur kinetischen Energie. Die Maxima $\varphi_1$ der Oszillationskennkurve ETF zeigen dagegen die Drehpositionen φ, an denen die kinetische Energie maximal ist.

Die Fig. 7 zeigt die Bestimmung der zukünftigen Drehzahl $n_0$ zu dem späteren Zeitpunkt $t_0$, die von dem Mikrocomputer 13 durchgeführt wird. Dabei wird der Verlauf $n_v$ der gemessenen Drehzahlen $n_s$, $n_p$ in die Zukunft, also entlang der Zeitachse t über den Stützpunkt S hinaus als prognostizierter zukünftiger Drehzahlverlauf $n_z$ fortgeschrieben, und zwar indem ein linearer Anteil $A_1$ und der oszillierende Anteil überlagert werden. Um die Genauigkeit bei der Bestimmung der zukünftigen Drehzahl $n_0$ zu zeigen, ist zusätzlich der tatsächliche Verlauf $n_v$ der gemessenen Drehzahlen $n_s$, $n_p$ auch über den Stützpunkt S hinaus dargestellt. Es wurde also testweise der tatsächliche Auslauf $n_A$ bis über den Zeitpunkt $t_0$ hinaus gemessen, auch wenn diese Drehzahlen nicht zur Bestimmung der prognostizierten zukünftigen Drehzahl $n_0$ genutzt werden. So ist ein direkter Vergleich des prognostizierten zukünftigen Drehzahlverlaufs $n_z$ und des tatsächlichen Verlaufs $n_v$ möglich.

Die zukünftige Drehzahl $n_0$ zu dem Zeitpunkt $t_0$ wird bestimmt, indem der lineare Anteil $A_1$, der die Steigung m der zuvor bestimmten Ausgleichsgeraden $n_M$ aufweist, an dem Stützpunkt S angesetzt wird, also quasi die Ausgleichsgerade $n_M$ in die Zukunft fortgeschrieben wird.

Um die zukünftige Drehzahl $n_0$ genauer zu bestimmen, wird, wie zuvor genannt, auch die Oszillation des Verlaufs $n_v$ durch den oszillierenden Anteil berücksichtigt. Dazu wird die Oszillationskennkurve ETF mittels der Standardamplitudenkennlinie $n_{SA}$ unter Berücksichtigung der festgelegten einfachen Rechenvorschrift gemäß der jeweiligen Amplitudenkorrekturstufe skaliert. Alle Figuren zeigen lediglich schematische nicht maßstabsgerechte Darstellungen. Im Übrigen wird insbesondere auf die zeichnerische Darstellungen für die Erfindung als Wesentlich verwiesen.

**Patentansprüche**

1. Verfahren zur Bestimmung einer zukünftigen Drehzahl ($n_0$) einer sich drehenden Antriebswelle (9) von einer Brennkraftmaschine (2) während die Brennkraftmaschine (2) nach einem Ausschalten ausläuft, wobei die zukünftige Drehzahl ($n_0$) aus einem Verlauf ($n_v$) gemessener Drehzahlen ($n_s$, $n_p$) berechnet wird, wobei an verschiedenen Drehpositionen ($\varphi$) der Antriebswelle (9) gemessene, momentane Drehzahlen ($n_s$, $n_p$) ausgewertet werden und wobei der gemessene Verlauf ($n_v$) eine Oszillation aufweist und die zukünftige Drehzahl ($n_0$) nur aus Drehzahlen ($n_s$, $n_p$) abgeleitet wird, die gemeinsam einen zeitlichen Abschnitt des Verlaufs ($n_v$) überspannen, wobei der zeitliche Abschnitt im Wesentlichen genau einer Periodendauer (P) der Oszillation entspricht, wobei eine Ausgleichsgerade ($n_M$) mit einer Steigung (m) vom Verlauf ($n_v$), aus den gemessenen Drehzahlen ($n_s$, $n_p$) über eine Methode der Mittelwertbildung, bestimmt wird und die zukünftige Drehzahl ($n_0$) zumindest aus einem linearen Anteil ($n_{A1}$) mit der Steigung (m) abgeleitet wird, und zwar mit einem Stützpunkt (S) für den linearen Anteil ($n_{A1}$), der ein Punkt der Ausgleichsgerade ($n_M$) entsprechend einem Zeitpunkt (tS) einer jüngsten gemessenen Drehzahl ($n_s$) ist, die bei der Bestimmung der zukünftigen Drehzahl ($n_0$) berücksichtigt wird, **dadurch gekennzeichnet, dass** die zukünftige Drehzahl ($n_0$) zumindest aus einem oszillierenden Anteil abgeleitet wird, wobei der oszillierende Anteil aus einer Oszillationskennkurve (ETF) und aus einer drehzahlabhängigen Amplitudenkennlinie abgeleitet wird, wobei der oszillierende Anteil entsprechend einer Amplitudenkorrekturstufe aus der Amplitudenkennlinie abgeleitet wird, wobei die Amplitudenkorrekturstufe abgeleitet wird, indem eine Maximalamplitude der Oszillation des Verlaufs der gemessenen Drehzahlen bestimmt wird.

2. Steuervorrichtung (1), insbesondere für ein Start-Stopp-System eines Kraftfahrzeugs, mit einer Auswerteeinrichtung (13), insbesondere mit einem Mikrocomputer (13), zum Berechnen einer zukünftigen Drehzahl ($n_0$) aus einem Verlauf ($n_v$) der gemessenen Drehzahlen ($n_s$, $n_p$) einer Antriebswelle (9) von einer Brennkraftmaschine (2), **dadurch gekennzeichnet, dass** die Auswerteeinrichtung (13) zum Auswerten von an verschiedenen Drehpositionen ($\varphi$) der Antriebswelle (9) gemessenen, momentanen Drehzahlen ($n_s$, $n_p$) ausgebildet ist, und zwar gemäß dem Verfahren nach Anspruch 1.

3. Computerprogrammprodukt, das in einem Programmspeicher (14) mit Programmbefehlen eines Mikrocomputers (13) ladbar ist, um alle Schritte des Verfahrens nach Anspruch 1 auszuführen, insbesondere wenn das Computerprogrammprodukt in einer Steuervorrichtung (1) nach Anspruch 2 ausgeführt wird.

**Claims**

1. Method for determining a future rotational speed ($n_0$) of a rotating driveshaft (9) of an internal combustion engine (2) while the internal combustion engine (2) runs down after being turned off, the future rotational speed (no) being calculated from a profile ($n_v$) of measured rotational speeds ($n_s$, $n_p$), measured, instantaneous rotational speeds ($n_s$, $n_p$) being evaluated at various rotational positions ($\varphi$) of the driveshaft (9), and the measured profile ($n_v$) exhibiting an oscillation and the future rotational speed ($n_0$) being derived only from rotational speeds ($n_s$, $n_p$) which extend jointly over a time segment of the profile ($n_v$), the time segment corresponding substantially accurately to a period (P) of the oscillation, a compensating straight line ($n_M$) with a slope (m) of the profile ($n_v$) being determined from the measured rotational speeds ($n_s$, $n_p$) via an averaging method, and the future rotational speed ($n_0$) being derived at least from a linear portion ($n_{A1}$) with the slope (m) and, specifically, with an interpolation point (S) for the linear portion ($n_{A1}$), which is a point on the compensating straight line ($n_M$) corresponding to an instant (tS) of a most recent measured rotational speed ($n_s$) which is taken into account in determining the future rotational speed ($n_0$), **characterized in that** the future rotational speed ($n_0$) is derived at least from an oscillating portion, the oscillating portion being derived from an oscillation characteristic curve (ETF) and from an amplitude characteristic dependent on rotational speed, the oscillating portion corresponding to an amplitude correction stage being derived from the amplitude characteristic, the amplitude correction stage being derived by determining a maximum amplitude of the oscillation of the profile of the measured rotational speeds.

2. Control device (1), in particular for a start-stop system of a motor vehicle, having an evaluation device (13), in particular having a microcomputer (13), for calculating a future rotational speed ($n_0$) from a profile ($n_v$) of the measured rotational speeds ($n_s$, $n_p$) of a driveshaft (9) of an internal combustion engine (2), **characterized in that** the evaluation device (13) is designed to evaluate instantaneous rotational speeds ($n_s$, $n_p$) measured at various rotational positions ($\varphi$) of the driveshaft (9), specifically in accordance with the method according to Claim 1.

3. Computer program product which can be loaded in a program memory (14) with program instructions of a microcomputer (13) in order to execute all steps of the method according to Claim 1, in particular when the computer program product is executed in a control device (1) according to Claim 2.

**Revendications**

1. Procédé de détermination d'une future vitesse de rotation ($n_0$) d'un arbre d'entraînement (9) en rotation d'un moteur à combustion interne (2) pendant la course d'inertie du moteur à combustion interne (2) après une mise à l'arrêt, la future vitesse de rotation ($n_0$) étant calculée à partir d'une courbe ($n_v$) de vitesses de rotation ($n_s$, $n_p$) mesurées, des vitesses de rotation ($n_s$, $n_p$) momentanées mesurées étant interprétées en différentes positions de rotation ($\varphi$) de l'arbre d'entraînement (9) et la courbe ($n_v$) mesurée présentant une oscillation et la future vitesse de rotation ($n_0$) étant uniquement dérivée des vitesses de rotation ($n_s$, $n_p$) qui, ensemble, couvrent une portion dans le temps de la courbe ($n_v$), la portion dans le temps correspondant sensiblement à exactement la durée d'une période (P) de l'oscillation, une droite de compensation ($n_M$) ayant une pente (m) depuis la courbe ($n_v$) étant déterminée à partir des vitesses de rotation ($n_s$, $n_p$) mesurées par le biais d'une méthode de calcul de la moyenne, et la future vitesse de rotation ($n_0$) étant dérivée au moins d'une composante linéaire ($n_{A1}$) ayant la pente (m), et ce avec un point de référence (S) pour la composante linéaire ($n_{A1}$) qui est un point de la droite de compensation ($n_M$) correspondant à un instant (tS) d'une vitesse de rotation ($n_s$) mesurée la plus récente qui est prise en compte lors de la détermination de la future vitesse de rotation ($n_0$), **caractérisé en ce que** la future vitesse de rotation ($n_0$) est au moins dérivée d'une composante oscillante, la composante oscillante étant dérivée d'une courbe caractéristique d'oscillation (ETF) et d'une courbe caractéristique d'amplitude dépendant de la vitesse de rotation, la composante oscillante étant dérivée de la courbe caractéristique d'amplitude conformément à un niveau de correction de l'amplitude, le niveau de correction de l'amplitude étant dérivé en déterminant une amplitude maximale de l'oscillation de la courbe des vitesses de rotation mesurées.

2. Dispositif de commande (1), notamment pour un système Start-Stop d'un véhicule automobile, comprenant un appareil d'interprétation (13), notamment doté d'un microordinateur (13), destiné à calculer une future vitesse de rotation ($n_0$) à partir d'une courbe ($n_v$) des vitesses de rotation ($n_s$, $n_p$) mesurées d'un arbre d'entraînement (9) d'un moteur à combustion interne (2), **caractérisé en ce que** l'appareil d'interprétation (13) est configuré pour interpréter des vitesses de rotation ($n_s$, $n_p$) momentanées mesurées en différentes positions de rotation ($\varphi$) de l'arbre d'entraînement (9), et ce conformément au procédé selon la revendication 1.

3. Produit programme informatique, lequel peut être chargé dans une mémoire de programme (14) avec des instructions de programme d'un microbrdinateur (13) pour exécuter toutes les étapes du procédé selon la revendication 1, notamment lorsque le produit programme informatique est exécuté dans un dispositif de commande (1) selon la revendication 2.

Fig. 1

Fig. 2

Fig. 3

**Fig. 4**

**Fig. 5**

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009083477 A1

- DE 102008041037